# EUROPEAN PATENT SPECIFICATION

(11) **EP 2 797 358 B1**
(45) Date of publication and mention of the grant of the patent: **12.04.2017**
(21) Application number: 13738862.5
(22) Date of filing: 21.01.2013
(51) Int. Cl.: H04W 28/16, H04W 36/00, H04W 28/18

(54) **METHOD, DEVICE AND SYSTEM FOR CELL CAPABILITY INFORMATION INTERACTION**
VERFAHREN, VORRICHTUNG UND SYSTEM ZUR ZELLKAPAZITÄTS-INFORMATIONSINTERAKTION
PROCÉDÉ, DISPOSITIF ET SYSTÈME DESTINÉS À UNE INTERACTION D'INFORMATIONS SUR LA CAPACITÉ DES CELLULES

(30) Priority: 21.01.2012 CN 201210019475
(43) Date of publication of application: 29.10.2014
(73) Proprietor: Huawei Technologies Co., Ltd., Longgang District Shenzhen, Guangdong 518129 (CN)
(72) Inventor: CHEN, Jun, Shenzhen Guangdong 518129 (CN); ZHENG, Xiaoxiao, Shenzhen Guangdong 518129 (CN); LI, Bingzhao, Shenzhen Guangdong 518129 (CN)
(74) Representative: Gill Jennings & Every LLP
(86) International application number: PCT/CN2013/070779
(87) International publication number: WO 2013/107420

(56) References cited:
- CN-A- 1 917 661
- CN-A- 101 626 601
- CN-A- 102 131 243
- HUAWEI ET AL: "Considerations on Downlink for Introducing Multiflow Data Transmission", 3GPP DRAFT; R1-113853, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20111114 - 20111118, 8 November 2011 (2011-11-08), XP050561944, [retrieved on 2011-11-08]
- QUALCOMM INCORPORATED: "Configuration of HSDPA Multipoint transmission", 3GPP DRAFT; R2-115201_CONFIGURATION OF HSDPA MULTIPOINT TRANSMISSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Zhuhai; 20111010, 4 October 2011 (2011-10-04), XP050540990, [retrieved on 2011-10-04]
- NOKIA SIEMENS NETWORKS: "General considerations on the HSDPA Multiflow", 3GPP DRAFT; R2-115999_MP_GENERAL_V16, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. San Francisco, USA; 20111114 - 20111118, 8 November 2011 (2011-11-08), XP050564382, [retrieved on 2011-11-08]
- HUAWEI ET AL: "Dynamic control for multiflow transmission", 3GPP DRAFT; R2-116018 DYNAMIC CONTROL FOR MULTIFLOW TRANSMISSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. San Francisco, USA; 20111114 - 20111118, 8 November 2011 (2011-11-08), XP050564391, [retrieved on 2011-11-08]

## Description

### TECHNICAL FIELD

Embodiments of the present invention relate to the field of wireless communications, and in particular, to a method, device and system for cell capability information interaction.

### BACKGROUND

UMTS (Universal Mobile Telecommunications System, universal mobile telecommunications system) is a third generation (3G) mobile communications technology widely used currently.

An HSDPA (High Speed Downlink Packet Access, high speed downlink packet access) technology is introduced in the development of UMTS, and this technology can greatly increase the downlink data service rate of a user without changing an already built system network architecture (a theoretical maximum value can reach 14.4 Mbps).

In the HSDPA technology, only one HSDPA serving cell is configured for each UE (User Equipment, user equipment), and when a UE moves and a handed over needs to be performed, a network side needs to initiate a handover process so as to complete a handover from an original HSDPA serving cell to a target HSDPA serving cell.

In the prior art, in a process of connecting a UE to a cell, an RNC (Radio Network Controller, radio network controller) needs to perform admission control according to a cell capability and a cell resource. For example, the RNC needs to know a capability of the UE and a capability of the cell so as to perform configuration properly. When a local cell is established on a NodeB side, conditions of physical resources (such as a cell capability) of the NodeB need to be reported to the RNC to assist in resource admission.

An HSDPA-Multiflow-Tx (HSDPA multiflow transmission) technology is also introduced in the development of UMTS. However, in the prior art, an RNC cannot perform proper configuration for an HSDPA multiflow transmission operation of a UE after connection of the UE, and consequently a feature of HSDPA multiflow transmission cannot be effectively applied.

"Considerations on Downlink for Introducing Multiflow Data Transmission" 3GPP DRAFT; R1-113853, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE vol. RAN WG1, no. San Francisco, USA; 20111114-20111118, 8 November 2001, discloses a method for deciding when to activate or deactivate a multiflow data transmission. This document discloses the following two scenarios: in an Intra-NodeB scenario, a NodeB decides when to activate or deactivate the multiflow transmission based on uplink interference and/or scheduling resource allocation and/or traffic volume; in an Inter-NodeB scenario, an assisting NodeB decides when to deactivate the multiflow transmission based on some measures and/or scheduling resource allocation and/or traffic volume, and a serving NodeB activates the multiflow transmission based on traffic volume.

"Configuration of HSDPA Multipoint transmission" 3GPP DRAFT; R2-115201_CONFIGURATION OF HSDPA MULTIPOINT TRANSMISSION, 3RD GENERATIONS PARTNERSHIP PROJECT (3GPP), MOBILE COMPETENCE CETRE; 650, ROUTE DES LUCIOLES; F-06321 SOPHIA-ANTIPOLIS CEDEX; FRANCE, vol. RAN WG2, NO. Zhuhai; 20111010, 4 October 2011, discloses a list of HSDPA multipoint configurations. Rel-11 HSDPA multiflow data transmission allowed configurations should be: SF-DC, DF-DC/3C/4C, TF-3C/4C, 4F-4C.

"General considerations on the HSDPA Multiflow", 3GPP DRAFT; R2-115999_MP_GENERAL_V16, 3RD GENERATIONS PARTNERSHIP PROJECT (3GPP), MOBILE COMPETENCE CETRE; 650, ROUTE DES LUCIOLES; F-06921 SOPHIA-ANTIPOLIS CEDEX; FRANCE, vol. RAN WG2, no. San Francisco, USA; 20111114-20111118, 8 November 2011, discloses three proposals. The first proposal is that study whether existing UE event triggers are sufficient, or whether new measurement triggers should be introduced. The second proposal is that discuss whether the multiflow capable UE should also support the extended measurement capability. The third proposal is that the mobility in multiflow is based on the legacy mobility procedure.

"Dynamic control for multiflow transmission" 3GPP DRAFT; R2-116018 DYNAMIC CONTROL FOR MULTIFLOW TRANSMISSION, 3RD GENERATIONS PARTNERSHIP PROJECT (3GPP), MOBILE COMPETENCE CETRE; 650, ROUTE DES LUCIOLES; F-06921 SOPHIA-ANTIPOLIS CEDEX; FRANCE, vol. RAN WG2, no. San Francisco, USA; 20111114-20111118, 8 November 2011, discloses a proposal that introduce HS-SCCH order to activate/deactivate assisting cell for intra-NodeB multiflow or Inter-NodeB multiflow.

### SUMMARY

Embodiments of the present invention provide a method, device and system for cell capability information interaction, which can effectively apply a feature of HSDPA multiflow transmission.

According to one aspect, a method for reporting cell capability information is provided, including: obtaining, by a base station, high speed downlink packet access HSDPA multiflow transmission capability information of at least one local cell controlled by the base station, wherein the HSDPA multiflow transmission capability information comprises first capability information; and sending, by the base station, the HSDPA multiflow transmission capability information to a radio network controller RNC for the RNC configuring an HSDPA multiflow transmission operation for a user equipment that is connected to the base station; wherein the first capability information is used for indicating that the at least one local cell supports an intra-base station multiflow transmission capability, or the first capability information is used for indicating that the at least one local cell supports an inter-base station multiflow transmission capability.

According to another aspect, a method for reporting cell capability information is provided, including: receiving, by a radio network controller RNC HSDPA multiflow transmission capability information of at least one local cell controlled by a base station from the base station; and configuring, by the RNC, according to the HSDPA multiflow transmission capability information, an HSDPA multiflow transmission operation for a user equipment that is connected to the base station; wherein the HSDPA multiflow transmission capability information comprises first capability information, and the first capability information is used for indicating that the at least one local cell supports an intra-base station multiflow transmission capability, or the first capability information is used for indicating that the at least one local cell supports an inter-base station multiflow transmission capability.

According to another aspect, a base station is provided, including: an obtaining unit, configured to obtain HSDPA multiflow transmission capability information of at least one local cell controlled by the base station; and a sending unit, configured to send the HSDPA multiflow transmission capability information obtained by the obtaining unit to a radio network controller RNC for the RNC configuring an HSDPA multiflow transmission operation for a user equipment that is connected to the base station; wherein the HSDPA multiflow transmission capability information obtained by the obtaining unit comprises first capability information, and the first capability information is used for indicating that the at least one local cell supports an intra-base station multiflow transmission capability, or the first capability information is used for indicating that the at least one local cell supports an inter-base station multiflow transmission capability.

According to another aspect, a radio network controller is provided, including: a receiving unit, configured to receive HSDPA multiflow transmission capability information, sent by a base station, of at least one local cell controlled by the base station; and a configuration unit, configured to configure, according to the multiflow transmission capability information received by the receiving unit, an HSDPA multiflow transmission operation for a user equipment that is connected to the base station; wherein the HSDPA multiflow transmission capability information received by the receiving unit comprises first capability information, and the first capability information is used for indicating that the at least one local cell supports an intra-base station multiflow transmission capability, or the first capability information is used for indicating that the at least one local cell supports an inter-base station multiflow transmission capability.

According to yet another aspect, a communications system is provided, including the foregoing base station and the foregoing radio network controller.

In the embodiments of the present invention, a base station sends multiflow transmission capability information of a local cell or local cell group to a radio network controller. In this way, after connection of a UE, the radio network controller can properly configure an HSDPA multiflow transmission operation of the UE according to the multiflow transmission capability information, thereby effectively applying a feature of HSDPA multiflow transmission.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a method for cell capability information interaction according to an embodiment of the present invention;
FIG. 2 is a flowchart of a method for cell capability information interaction according to another embodiment of the present invention;
FIG. 3 is a schematic diagram of a process of cell capability information interaction according to an embodiment of the present invention;
FIG. 4 is a schematic diagram of a process of cell capability information interaction according to another embodiment of the present invention;
FIG. 5A and FIG. 5B are schematic diagrams of examples of an Intra-NodeB MF-Tx state and an Inter-NodeB MF-Tx state respectively;
FIG. 6A to FIG. 6D are schematic diagrams of four MF-Tx modes;
FIG. 7 is a schematic diagram of an example of a cell structure;
FIG. 8 is a block diagram of a base station according to an embodiment of the present invention; and
FIG. 9 is a block diagram of a radio network controller according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

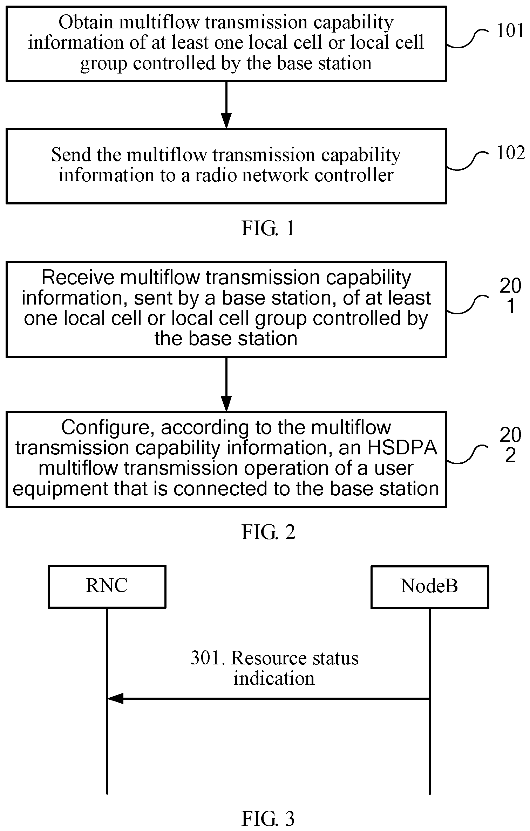

FIG. 1 is a flowchart of a method for cell capability information interaction according to an embodiment of the present invention. The method in FIG. 1 may be executed by a base station (such as a NodeB).
101. Obtain multiflow transmission capability information of at least one local cell or local cell group controlled by the base station.

Specifically, a "local cell" represents a set of physical resources in a cell within the coverage of the NodeB, and the "local cell" may be differentiated by using a local cell ID (Local Cell ID). A "local cell group" is a set of at least one local cell and has some resources that are shared by multiple local cells, and these cells belong to the local cell group.

Optionally, as an embodiment, the multiflow transmission capability information may comprise first capability information. The first capability information may be used to indicate that the at least one local cell or local cell group supports an intra-base station multiflow transmission capability, supports an inter-base station multiflow transmission capability, or does not support a multiflow transmission capability; or, the first capability information may be used to indicate that the at least one local cell or local cell group supports a multiflow transmission capability, or does not support a multiflow transmission capability.

Optionally, as another embodiment, the first capability information may further comprise at least one of: information about frequencies that are supported by multiflow transmission, information about a maximum number of multiflow transmission coordinating cells, a list of multiflow transmission coordinating cells of the base station, a list of non-multiflow transmission coordinating cells of the base station, a list of cells of the base station that support multiflow transmission, and a list of cells of the base station that do not support multiflow transmission.

Optionally, as another embodiment, the multiflow transmission capability information may further comprise second capability information and third capability information, or comprise combination information of the second capability information and the third capability information. The combination information is information used to indicate a combination of various capabilities in the second capability information and various capabilities in the third capability information, for example, may be a mapping value or an index value corresponding to the combination of the various capabilities in the second capability information and the various capabilities in the third capability information. However, a specific form of the combination information is not limited in the embodiment of the present invention, as long as the combination information can indicate the combination of the various capabilities in the second capability information and the various capabilities in the third capability information. In the following, examples of the two types of capability information and the combination information thereof are described in detail with reference to embodiments of Table 3 to Table 5.

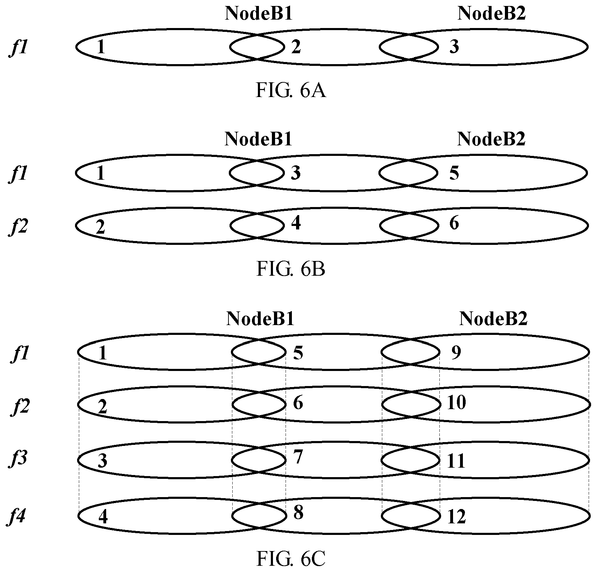

The second capability information and the third capability information may be extensions of the first capability information. Optionally, the second capability information may be used to indicate whether the at least one local cell or local cell group supports at least one of the following capabilities: an SF-DC (Single Frequency Dual Cell, single frequency dual cell) capability, a DF-4C (Dual Frequency 4 Cell, dual frequency four cell) capability, a 4F-8C (4 Frequency 4 Cell, four frequency eight cell) capability, and an 8F-16C (8 Frequency 16 Cell, eight frequency sixteen cell) capability. In the following, an example of the second capability information is described in detail with reference to the embodiment of Table 3 and embodiments of FIG. 6A to FIG. 6D.

Optionally, the third capability information may be used to indicate whether the at least one local cell or local cell group supports at least one of the following capabilities: a MIMO (Multiple Input Multiple Output, multiple-input multiple-output) capability, a MIMO single stream capability, a capability of cell specific transmission diversity handling in downlink, a capability of DC-HSDPA (Dual Carrier-HSDPA, dual carrier-HSDPA) on adjacent frequencies in a single frequency band, a capability of DC-HSDPA on non-adjacent frequencies in a single frequency band, a DB-DC-HSDPA (Dual Band-Dual Carrier-HSDPA, dual band-dual carrier-HSDPA) capability, a DC-HSUPA (Dual Carrier - High Speed Uplink Packet Access, dual carrier-high speed uplink packet access) capability, a 4C-HSDPA (4 Carrier -HSDPA, four carrier-HSDPA) capability, and an 8C-HSDPA (8 Carrier -HSDPA, eight carrier-HSDPA) capability. In the following, an example of the third capability information is described in detail with reference to the embodiment of Table 4.

102. Send the multiflow transmission capability information to a radio network controller.

A manner of reporting the multiflow transmission capability information is not limited in the embodiment of the present invention. The base station may send an information element to the RNC, where the information element may be sent in a message by the base station to the RNC, and the information element carries multiflow transmission capability information of all local cells or local cell groups of the at least one local cell or local cell group. When the at least one local cell or local cell group refers to all local cells or local cell groups controlled by the base station, the reported multiflow transmission capability information indicates an HSDPA multiflow transmission capability of the base station. In this case, the base station needs to report the multiflow transmission capability information to the RNC only once, and the RNC can know the multiflow transmission capability information of all the local cells or all the local cell groups controlled by the base station.

Alternatively, the base station may send at least one information element to the RNC. The at least one information element carries multiflow transmission capability information of one local cell or local cell group of the at least one local cell or local cell group. The at least one information element may be reported in a message by the base station to the RNC, or reported in multiple messages to the RNC respectively, which is not limited in the embodiment of the present invention.

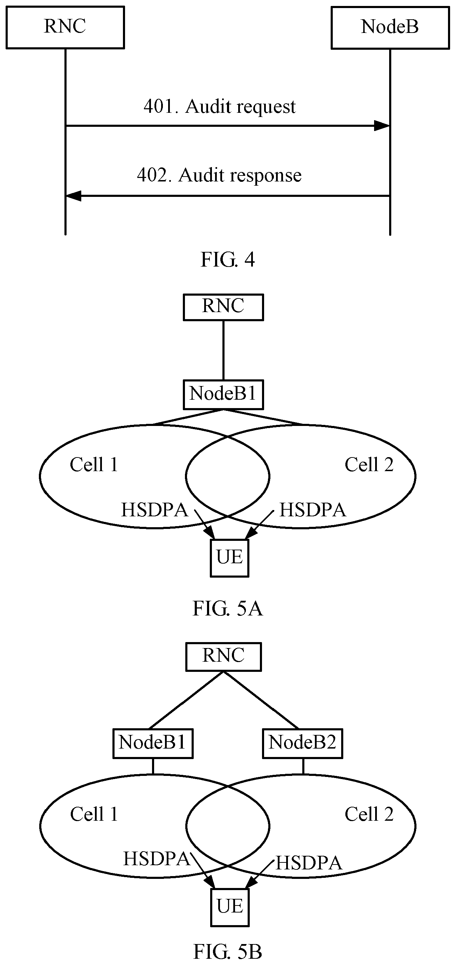

A message that carries the multiflow transmission capability information is not limited in the embodiment of the present invention. Instead, any proper message may be used. Optionally, as an embodiment, the multiflow transmission capability information may be carried in a resource status indication message that is sent to the radio network controller, or the multiflow transmission capability information may be carried in an audit response message that is sent to the radio network controller. In the following, examples of a message that carries the multiflow transmission capability information are further described with reference to embodiments of FIG. 3 and FIG. 4.

In the embodiment of the present invention, a base station sends multiflow transmission capability information of a local cell or local cell group to a radio network controller. In this way, after connection of a UE, the radio network controller can properly configure an HSDPA multiflow transmission operation for the UE according to the multiflow transmission capability information, thereby effectively applying a feature of HSDPA multiflow transmission.

FIG. 2 is a flowchart of a method for cell capability information interaction according to another embodiment of the present invention. The method in FIG. 2 may be executed by a radio network controller (such as an RNC).

201. Receive multiflow transmission capability information, sent by a base station, of at least one local cell or local cell group controlled by the base station.

Optionally, as an embodiment, the multiflow transmission capability information may comprise first capability information. The first capability information may be used to indicate that the at least one local cell or local cell group supports an intra-base station multiflow transmission capability, supports an inter-base station multiflow transmission capability, or does not support a multiflow transmission capability; or, the first capability information may be used to indicate that the at least one local cell or local cell group supports a multiflow transmission capability, or does not support a multiflow transmission capability.

Optionally, as another embodiment, the first capability information may further comprise at least one of: information about frequencies that are supported by multiflow transmission, information about a maximum number of multiflow transmission coordinating cells, a list of multiflow transmission coordinating cells of the base station, a list of non-multiflow transmission coordinating cells of the base station, a list of cells of the base station that support multiflow transmission, and a list of cells of the base station that do not support multiflow transmission.

Optionally, as another embodiment, the multiflow transmission capability information may further comprise second capability information and third capability information, or comprise combination information of the second capability information and the third capability information. The combination information is information used to indicate a combination of various capabilities in the second capability information and various capabilities in the third capability information, for example, may be a mapping value or an index value corresponding to the combination of the various capabilities in the second capability information and the various capabilities in the third capability information. However, a specific form of the combination information is not limited in the embodiment of the present invention, as long as the combination information can indicate the combination of the various capabilities in the second capability information and the various capabilities in the third capability information. In the following, examples of the two types of capability information and the combination information thereof are described in detail with reference to embodiments of Table 3 to Table 5.

The second capability information and the third capability information may be extensions of the first capability information. Optionally, the second capability information may be used to indicate whether the at least one local cell or local cell group supports at least one of the following capabilities: an SF-DC capability, a DF-4C capability, a 4F-8C capability, and an 8F-16C capability. In the following, an example of the second capability information is described in detail with reference to the embodiment of Table 3 and embodiments of FIG. 6A to FIG. 6D.

Optionally, the third capability information may be used to indicate whether the at least one local cell or local cell group supports at least one of the following capabilities: a MIMO capability, a MIMO single stream capability, a capability of cell specific transmission diversity handling in downlink, a capability of DC-HSDPA on adjacent frequencies in a single frequency band, a capability of DC-HSDPA on non-adjacent frequencies in a single frequency band, a DB-DC-HSDPA capability, a DC-HSUPA capability, a 4C-HSDPA capability, and an 8C-HSDPA capability. In the following, an example of the third capability information is described in detail with reference to the embodiment of Table 4.

A manner of receiving the multiflow transmission capability information by the RNC is not limited in the embodiment of the present invention. The RNC may receive an information element sent by the base station, where the information element may be sent in a message by the base station to the RNC, and the information element carries multiflow transmission capability information of all local cells or local cell groups of the at least one local cell or local cell group. When the at least one local cell or local cell group refers to all local cells or local cell groups controlled by the base station, the reported multiflow transmission capability information indicates an HSDPA multiflow transmission capability of the base station. In this case, the RNC needs to receive the multiflow transmission capability information from the base station only once to know the multiflow transmission capability information of all the local cells or local cell groups controlled by the base station.

Alternatively, the RNC may receive at least one information element sent by the base station. The at least one information element carries multiflow transmission capability information of one local cell or local cell group of the at least one local cell or local cell group. The at least one information element may be reported in a message by the base station to the RNC, or reported in multiple messages to the RNC respectively, which is not limited in the embodiment of the present invention.

A message that carries the multiflow transmission capability information is not limited in the embodiment of the present invention. Instead, any proper message may be used. Optionally, as an embodiment, the multiflow transmission capability information added by the base station to a resource status indication message may be received, or the multiflow transmission capability information added by the base station to an audit response message may be received. In the following, examples of messages that carry the multiflow transmission capability information are further described with reference to embodiments of FIG. 3 and FIG. 4.

202. Configure, according to the multiflow transmission capability information, an HSDPA multiflow transmission operation (MF-Tx operation) of a user equipment that is connected to the base station.

In the embodiment of the present invention, a base station sends multiflow transmission capability information of a local cell or local cell group to a radio network controller. In this way, after connection of a UE, the radio network controller can properly configure an HSDPA multiflow transmission operation for the UE according to the multiflow transmission capability information, thereby effectively applying a feature of HSDPA multiflow transmission.

A form of a specific message of HSDPA multiflow transmission capability information sent by a NodeB to the RNC is not limited in the embodiment of the present invention. For example, the NodeB may report capability information to the RNC by using an existing resource status indication (RESOURCE STATUS INDICATION) process or audit (Audit) process.

FIG. 3 is a schematic diagram of a process of cell capability information interaction according to an embodiment of the present invention. A resource status indication process is used in the embodiment of FIG. 3.

A triggering reason for the resource status indication process, for example, may comprise: addition of a local cell of a NodeB, deletion of a local cell of a NodeB, a change in a capability of a local cell or local cell group, or another reason.

301. When one of the foregoing triggering reasons is met, the NodeB triggers the resource status indication process and sends a resource status indication message to an RNC, and the NodeB may add, in the message, information and capability information of a local cell or local cell group that needs to be established, such as an HSDPA multiflow transmission capability information.

In the embodiment of the present invention, a base station sends multiflow transmission capability information of a local cell or local cell group to a radio network controller. In this way, after connection of a UE, the radio network controller can properly configure an HSDPA multiflow transmission operation for the UE according to the multiflow transmission capability information, thereby effectively applying a feature of HSDPA multiflow transmission.

FIG. 4 is a schematic diagram of a process of cell capability information interaction according to another embodiment of the present invention. A resource audit process is used in the embodiment of FIG. 4.

An RNC may also audit configurations and logical resources of a NodeB by using a resource audit process. By means of audit, the RNC may know the logical resources of the NodeB, and synchronize resources with the resources of the NodeB.
401. The RNC sends an audit request (Audit Request) message to the NodeB to request audit of the configurations and logical resources of the NodeB.
402. The NodeB returns an audit response (Audit Response) message to the RNC. The NodeB adds, to the audit response, information and capability information of a local cell or local cell group, such as an HSDPA multiflow transmission capability information.

In the embodiment of the present invention, a base station sends multiflow transmission capability information of a local cell or local cell group to a radio network controller. In this way, after connection of a UE, the radio network controller can properly configure an HSDPA multiflow transmission operation for the UE according to the multiflow transmission capability information, thereby effectively applying a feature of HSDPA multiflow transmission.

In the following, the HSDPA multiflow transmission capability information in the embodiment of the present invention is described in more detail with reference to specific examples. It should be noted that the examples are merely intended to help a person skilled in the art understand some possible implementation manners of the HSDPA multiflow transmission capability information in the present invention, rather than exhaustively enumerating all implementation manners, and therefore cannot be understood as a limitation to the scope of the present invention.

The multiflow transmission capability information in the embodiment of the present invention may comprise first capability information. Optionally, the multiflow transmission capability information may further comprise second capability information and third capability information, or combination information of the second capability information and the third capability information. The first capability information may be used to indicate whether the local cell or local cell group supports multiflow transmission, and therefore may also be referred to as MF-Tx basic capability information. The second capability information (which may also be referred to as "fundamental capability information" below) and the third capability information (which may also be referred to as "enhanced capability information" below) may be extensions of the first capability information.

The basic capability information indicates whether the local cell or local cell group supports MF-Tx (Multiflow-Tx, multiflow transmission). Specifically, as an embodiment, the basic capability information may indicate that the local cell or local cell group supports an intra-base station multiflow transmission (Intra-NodeB MF-Tx) capability, supports an inter-base station multiflow transmission (Inter-NodeB MF-Tx) capability, or does not support an MF-Tx capability, where the Inter-NodeB MF-Tx capability comprises the Intra-NodeB MF-Tx capability. In other words, a cell or local cell or local cell group that has the Inter-NodeB MF-Tx capability also necessarily has the Intra-NodeB MF-Tx capability.

Optionally, as another embodiment, the basic capability information may indicate that at least one cell or local cell or local cell group supports an MF-Tx capability, or does not support the MF-Tx capability. Here, the MF-Tx capability may be an Intra-NodeB MF-Tx capability and an Inter-NodeB MF-Tx capability, where the two capabilities are independent of each other and are not associated; or, the MF-Tx capability may be an Inter-NodeB MF-Tx capability, and in this case, the Inter-NodeB MF-Tx capability comprises an Intra-NodeB MF-Tx capability.

Current MF-Tx modes comprise SF-DC, DF-4C, 4F-8C, and 8F-16C. The foregoing "MF-Tx capability" is specifically a capability that supports at least one MF-Tx mode.

FIG. 5A and FIG. 5B are schematic diagrams of examples of an Intra-NodeB MF-Tx state and an Inter-NodeB MF-Tx state respectively. It should be noted that FIG. 5A and FIG. 5B merely show one of the simplest modes of MF-Tx, that is, an SF-DC mode to be described in the following.

As shown in FIG. 5A and FIG. 5B, working frequencies of two cells, namely, cell 1 and cell 2 are the same. It may be classified into an Intra-NodeB MF-Tx (FIG. 5A) state and an Inter-NodeB MF-Tx (FIG. 5B) state depending on whether the two cells belong to a same NodeB (base station).

FIG. 6A to FIG. 6D are schematic diagrams of four MF-Tx modes. Current MF-Tx modes comprise SF-DC, DF-4C, 4F-8C, and 8F-16C.

FIG. 6A is a schematic diagram of the SF-DC mode. As shown in FIG. 6A, a scenario of single-frequency (f1) coverage is provided, where there is a coverage overlapping area between different cells, cell 1 and cell 2 are cells of a base station NodeB 1, and cell 3 is a cell of a base station NodeB 2. When a UE is within a coverage overlapping area, the UE may receive HSDPA data from at least two cells simultaneously.

SF-DC is further classified into Intra-NodeB SF-DC (for example, cell 1 and cell 2) and Inter-NodeB SF-DC (for example, cell 2 and cell 3) depending on whether cells participating in SF-DC coordination belong to a same NodeB.

FIG. 6B is a schematic diagram of the DF-4C mode. As shown in FIG. 6B, a scenario of duel-frequency (f1, f2) coverage is provided, where there is a coverage overlapping area between different cells at each frequency, cell 1, cell 2, cell 3, and cell 4 are cells of a base station NodeB 1, and cell 5 and cell 6 are cells of a base station NodeB 2. It can be seen longitudinally that cells at different frequencies may have similar coverage areas or different coverage areas, and when a UE is within a coverage overlapping area, the UE may receive HSDPA data from at most four cells simultaneously.

DF-4C also optionally comprises two modes, namely, DF-2C and DF-3C, where in DF-2C, two cells at two frequencies participate in DF-2C coordination; and in DF-3C, three cells at two frequencies participate in DF-3C coordination.

DF-4C is further classified into Intra-NodeB DF-4C (for example, cell 1, cell 2, cell 3, and cell 4) and Inter-NodeB DF-4C (for example, cell 3, cell 4, cell 5, and cell 6) depending on whether cells participating in DF-4C coordination belong to a same NodeB.

FIG. 6C is a schematic diagram of the 4F-8C mode. As shown in FIG. 6C, a scenario of four-frequency (f1, f2, f3, f4) coverage is provided, where there is a coverage overlapping area between different cells at each frequency, cell 1 to cell 8 are cells of a base station NodeB 1, and cell 9 to cell 12 are cells of a base station NodeB 2. It can be seen longitudinally that cells at different frequencies may have similar coverage areas or different coverage areas, and when a UE is within a coverage overlapping area, the UE may receive HSDPA data from at most 8 cells simultaneously.

4F-8C also optionally comprises xF-yC (3≤x≤4, 3≤y≤8). A difference between different modes lies in a frequency and cell that participate in coordination.

4F-8C is further classified into Intra-NodeB 4F-8C (for example, cell 1 to cell 8) and Inter-NodeB 4F-8C (for example, cell 5 to cell 12) depending on whether cells participating in 4F-8C coordination belong to a same NodeB.

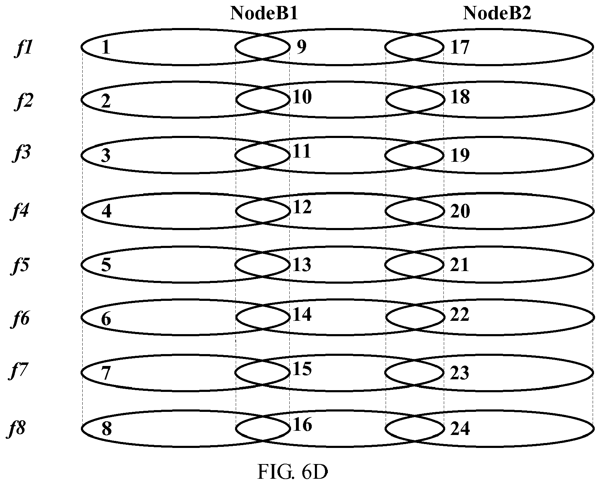

FIG. 6D is a schematic diagram of the 8F-16C mode. As shown in FIG. 6D, a scenario of eight-frequency (f1, f2, f3, f4, f5, f6, f7, f8) coverage is provided, where there is a coverage overlapping area between different cells at each frequency, cell 1 to cell 16 are cells of a base station NodeB 1, and cell 17 to cell 24 are cells of a base station NodeB 2. It can be seen longitudinally that cells at different frequencies may have similar coverage areas or different coverage areas, and when a UE is within a coverage overlapping area, the UE may receive HSDPA data from at most 16 cells simultaneously.

8F-16C also optionally comprises xF-yC (5≤x≤8, 5≤y≤16). A difference between different modes lies in a frequency and cell that participate in coordination.

8F-16C is further classified into Intra-NodeB 8F-16C (for example, cell 1 to cell 16) and Inter-NodeB 8F-16C (for example, cell 9 to cell 24) depending on whether cells participating in 8F-16C coordination belong to a same NodeB.

Optionally, as an embodiment, the foregoing basic capability information may, by default, indicate that at least one local cell or local cell group supports an MF-Tx capability in an SF-DC mode. In this case, the basic capability information may be extended by using MF-Tx extension capability information (that is, the foregoing second capability information and third capability information, or combination information of the second capability information and the third capability information), so as to indicate more MF-Tx capabilities.

Optionally, as another embodiment, the RNC may limit a multiflow transmission coordinating cell or a frequency of the local cells according to a neighboring cell list of the local cells, thereby optimizing a cell capability interaction process of HSDPA multiflow transmission on a network side.

Optionally, as another embodiment, the first capability information may further comprise at least one of: information about frequencies that are supported by MF-Tx, information about a maximum number of MF-Tx coordinating cells, a list of MF-Tx coordinating cells of the base station, a list of non-MF-Tx coordinating cells of the base station, a list of cells of the base station that support MF-Tx, and a list of cells of the base station that do not support MF-Tx.

For example, in a case in which multiflow transmission capability information corresponds to each local cell or local cell group (that is, the base station reports multiple information elements to the RNC, so as to indicate multiflow transmission capability information of each local cell or local cell group), the first capability information may further comprise information about frequencies that are supported by MF-Tx, information about a maximum number of MF-Tx coordinating cells, and a list of MF-Tx coordinating cells of the base station (or a list of non-MF-Tx coordinating cells of the base station). The MF-Tx coordinating cells of the base station are cells of the base station that can perform multiflow transmission coordination with a local cell. The non-MF-Tx coordinating cells of the base station are cells of the base station that cannot perform multiflow transmission coordination with a local cell.

Information about frequencies that are supported by MF-Tx may be a list of frequencies, or a maximum number of MF-Tx frequencies that are supported by a cell. The information about frequencies may be carried in the basic capability information only in an MF-Tx mode (DF-4C, 4F-8C, or 8F-16C) with more than one frequency. In addition, the coordinating cell or frequency of the local cells may be limited by the RNC according to the neighboring cell list of the local cells.

In addition, in a case in which multiflow transmission capability information corresponds to the base station (that is, the base station reports an information element to the RNC, so as to indicate multiflow transmission capability information of all local cells or local cell groups controlled by the base station), the first capability information may further comprise a list of cells of the base station that support MF-Tx, or a list of cells of the base station that do not support MF-Tx. By using the list, the RNC may know a cell of a NodeB that may perform MF-Tx coordination. If the NodeB does not report the list, the RNC may consider that all cells of the NodeB support MF-Tx, and all neighboring cells may be configured into MF-Tx. In addition, the coordinating cell or frequency may be limited by the RNC according to a neighboring cell list.

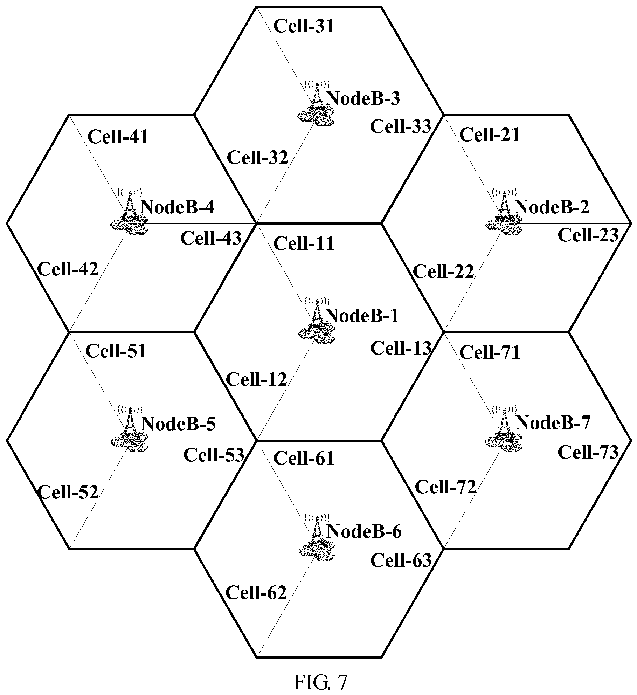

Here, an example of a base station reporting first capability information to an RNC in an embodiment of the present invention is provided. FIG. 7 is a schematic diagram of an example of a cell structure. As shown in FIG. 7, each base station NodeB-i (where i is a positive integer and 1≤i≤7) controls three cells, namely, cell-i1, cell-i2 and cell-i3. It should be noted that the cell structure in FIG. 7 is merely exemplary, and the cell structure is not limited in the embodiment of the present invention.

In the example shown in FIG. 7, in a case in which multiflow transmission capability information corresponds to each cell, NodeB-1 reports a cell capability of cell-11, cell-12 and cell-13. Assuming that all the three cells support Inter-NodeB MF-Tx, and all cells of NodeB-2, NodeB-3 and NodeB-4 also support Inter-NodeB MF-Tx.

In a case in which multiflow transmission capability information corresponds to a base station, NodeB-1 supports Inter-NodeB MF-Tx, and a list of Inter-NodeB MF-Tx cells carries (cell-11, cell-12, cell-13); all cells of NodeB-2, NodeB-3 and NodeB-4 also support Inter-NodeB MF-Tx, and reported lists of cells are (cell-21, cell-22, cell-23), (cell-31, cell-32, cell-33), and (cell-41, cell-42, cell-43), respectively.

After learning a cell capability, the RNC may create a coordinating cell table for controlling a possible combination of MF-Tx coordinating cells in a network, which facilitates resource processing on a network side. For example, the RNC may create a coordinating cell table as shown in Table 1 or Table 2 below.

**Table 1 Example 1 of coordinating cell table**

| | |
|---|---|
| Cell ID | MF-Tx coordinating cell |
| Cell-11 | Cell-32, Cell-22 |
| Cell-12 | Cell-41, Cell-43 |
| Another cell, or the like | |

**Table 2 Example 2 of coordinating cell table**

| | |
|---|---|
| Cell ID | Maximum number of MF-Tx coordinating cells or maximum number of frequencies |
| Cell-11 | 2 |
| Cell-12 | 2 |
| Another cell, or the like | |

The RNC may configure, in a manner of the coordinating cell table of Table 1 or Table 2 and according to the multiflow transmission capability information, an HSDPA multiflow transmission operation of a user equipment that is connected to the base station. However, the embodiment of the present invention is not limited to the manner of the coordinating cell table, and the HSDPA multiflow transmission operation of the user equipment may also be configured in another manner.

The following describes examples of second capability information and third capability information. The second capability information and the third capability information may be further extensions of the foregoing first capability information. Table 3 is an example of the second capability information (fundamental capability information). Table 4 is an example of the third capability information (enhanced capability information).

**Table 3 Example of fundamental capability information**

| | |
|---|---|
| X1 | SF-DC capability |
| X2 | DF-4C capability |
| X3 | 4F-8C capability |
| X4 | 8F-16C capability |

Table 3 defines four types of cell MF-Tx capabilities and corresponding fundamental capability information (X1-X4), where a DF-4C capability is downward compatible with a SF-DC capability, a 4F-8C capability is downward compatible with a DF-4C capability, and an 8F-16C capability is downward compatible with a 4F-8C capability. This may be understood that a capability of a higher level always supports a capability of a lower level.

Table 4 may be used to combine with Table 3 to extend application of MF-Tx.

**Table 4 Example of enhanced capability information**

| | | |
|---|---|---|
| Y1 | MIMO capability | Multiple-antenna transmission on a network side and multiple-antenna reception on a UE side may effectively improve a downlink peak throughput rate |
| Y2 | MIMO single stream capability | A MIMO single stream transmission mode may be considered as that when data is sent on a network side, the same data is sent by using multiple antennas, so as to obtain |
| | | a multiple-antenna transmission gain |
| Y3 | Capability of cell specific transmission diversity handling in downlink | A cell supports cell specific transmission diversity handling in downlink, where transmission diversity handling in downlink means when a downlink signal is sent on a network side, one channel of data may be divided, in a special coding or sending manner, into multiple channels of data for sending, so as to obtain a diversity gain |
| Y4 | DC-HSDPA on adjacent frequencies in a single frequency band | It is allowed to simultaneously send different data in two cells on different frequencies (on adjacent frequencies in a single frequency band) on a network side, so as to improve a downlink peak throughput rate |
| Y5 | DC-HSDPA on non-adjacent frequencies in a single frequency band | It is allowed to simultaneously send different data in two cells on different frequencies (on non-adjacent frequencies in a single frequency band) on a network side, so as to improve a downlink peak throughput rate |
| Y6 | DB-DC-HSDPA | It is allowed to simultaneously send different data in two cells on dual-band frequencies (on frequencies in different frequency bands) on a network side, so as to improve a downlink peak throughput rate |
| Y7 | DC-HSUPA | A terminal is allowed to simultaneously send different data on different frequencies (on adjacent frequencies in a single frequency band), so as to improve an uplink peak throughput rate |
| Y8 | 4C-HSDPA | It is allowed to simultaneously send different data in four cells on different frequencies (on adjacent frequencies in a single frequency band)on a network side, so as to improve a downlink peak throughput rate |
| Y9 | 8C-HSDPA | It is allowed to simultaneously send different data in eight cells on different frequencies (on adjacent frequencies in a single frequency band)on a network side, so as to improve a downlink peak throughput rate |

Table 4 defines various enhanced capabilities and corresponding enhanced capability information (Y1-Y9). A base station may combine the second capability information in Table 3 and the third capability information in Table 4 and report the combination information, and a combination rule is as follows:
(1) The base station reports the second capability information and the third capability information. In other words, the base station reports second capability information (XI-X4) corresponding to the capabilities in Table 3 and third capability information (Y1-Y9) corresponding to the capabilities in Table 4 respectively.
   For example, assuming that a cell supports a DF-4C+MIMO capability, the base station may report X2 and Y1. In addition, assuming that the cell supports DF-4C+DC-HSDPA on adjacent frequencies in a single frequency band, the base station may report X2 and Y4.
   A manner of reporting the second capability information and the third capability information in this case is not limited in the embodiment of the present invention. For example, the second capability information and the third capability information may be carried in different messages or information elements respectively, or the second capability information and the third capability information are carried in a same message or information element simultaneously.
(2) The base station reports combination information of the second capability information and the third capability information.

For example, the base station may first combine the capabilities in Table 3 and Table 4, and then report the combined indication information (that is, the foregoing combination information).

For example, the base station may first perform permutations and combinations on Table 3 and Table 4, and then form a new Table 5 below. It should be noted that at least one capability in Table 3 may be combined with at least one capability in Table 4.

**Table 5 Examples of combinations of fundamental capability information and enhanced capability information**

| | | |
|---|---|---|
| Z1 | SF-DC+MIMO (X1+Y1) | At least one cell in SF-DC may support a configuration of MIMO |
| Z2 | DF-4C+MIMO (X2+Y1) | At least one cell in DF-4C may support a configuration of MIMO |
| Z3 | DF-4C+DC-HSDPA on adjacent frequencies in a single frequency band (X2+Y4) | Two cells on adjacent frequencies in DF-4C support DC-HSDPA on adjacent frequencies in a single frequency band |
| ... (other combinations of the fundamental capability information and the enhanced capability information are omitted) | | |

Assuming that a cell supports a DF-4C+MIMO capability, the base station may report Z2. In addition, assuming that the cell supports DF-4C+DC-HSDPA on adjacent frequencies in a single frequency band, the base station may report Z3.

The embodiment of the present invention provides an effective method for interaction of HSDPA multiflow transmission cell capability information on a network side. In this way, after a UE is connected to a network, the network is flexible enough to perform MF-Tx configuration, and also ensures that a processing capability on the network side does not suffer from much impact.

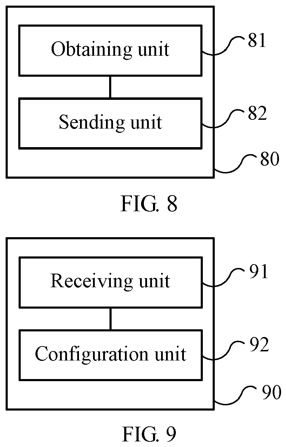

FIG. 8 is a block diagram of a base station according to an embodiment of the present invention. The base station 80 in FIG. 8 comprises an obtaining unit 81 and a sending unit 82.

The obtaining unit 81 obtains multiflow transmission capability information of at least one local cell or local cell group controlled by the base station 80. The sending unit 82 sends the multiflow transmission capability information obtained by the obtaining unit 81 to a radio network controller.

In the embodiment of the present invention, a base station sends multiflow transmission capability information of a local cell or local cell group to a radio network controller. In this way, after connection of a UE, the radio network controller can properly configure an HSDPA multiflow transmission operation for the UE according to the multiflow transmission capability information, thereby effectively applying a feature of HSDPA multiflow transmission.

The obtaining unit 81 may be implemented by using a processor, and the sending unit 82 may be implemented by using an interface transmitter.

Optionally, as an embodiment, the sending unit 82 may send an information element to a RNC, where the information element may be sent in a message by the sending unit 82 to the RNC, and the information element carries multiflow transmission capability information of all local cells or local cell groups of the at least one local cell or local cell group. When the at least one local cell or local cell group refers to all the local cells or local cell groups controlled by the base station, the multiflow transmission capability information indicates an HSDPA multiflow transmission capability of the base station. In this case, the sending unit 82 needs to report the multiflow transmission capability information to the RNC only once, and the RNC can know the multiflow transmission capability information of all the local cells or local cell groups controlled by the base station.

Alternatively, the sending unit 82 may send at least one information element to the RNC. The at least one information element each carries multiflow transmission capability information of one local cell or local cell group of the at least one local cell or local cell group. The at least one information element may be reported in a message by the sending unit 82 to the RNC, or reported in multiple messages to the RNC respectively, which is not limited in the embodiment of the present invention.

Optionally, as an embodiment, the sending unit 82 may add the multiflow transmission capability information to a resource status indication message that is sent to the radio network controller, or the sending unit 82 may add the multiflow transmission capability information to an audit response message that is sent to the radio network controller, as described in the embodiment of FIG. 3 or FIG. 4.

Optionally, as an embodiment, the multiflow transmission capability information may comprise first capability information. The first capability information may be used to indicate that the at least one local cell or local cell group supports an intra-base station multiflow transmission capability, supports an inter-base station multiflow transmission capability, or does not support a multiflow transmission capability; or, the first capability information may be used to indicate that the at least one local cell or local cell group supports a multiflow transmission capability, or does not support a multiflow transmission capability.

Optionally, as another embodiment, the first capability information may further comprise at least one of: information about frequencies that are supported by multiflow transmission, information about a maximum number of multiflow transmission coordinating cells, a list of multiflow transmission coordinating cells of the base station, a list of non-multiflow transmission coordinating cells of the base station, a list of cells of the base station that support multiflow transmission, and a list of cells of the base station that do not support multiflow transmission.

Optionally, as another embodiment, the multiflow transmission capability information may further comprise second capability information and third capability information, or comprise combination information of the second capability information and the third capability information. The combination information is information used to indicate a combination of various capabilities in the second capability information and various capabilities in the third capability information, for example, may be a mapping value or an index value corresponding to the combination of the various capabilities in the second capability information and the various capabilities in the third capability information. However, a specific form of the combination information is not limited in the embodiment of the present invention, as long as the combination information can indicate the combination of the various capabilities in the second capability information and the various capabilities in the third capability information, for example, as shown in Table 5.

The second capability information and the third capability information are extensions of the first capability information. Optionally, the second capability information may be used to indicate whether the at least one local cell or local cell group supports at least one of the following capabilities: an SF-DC capability, a DF-4C capability, a 4F-8C capability, and an 8F-16C capability, for example, as shown in Table 3.

Optionally, the third capability information may be used to indicate whether the at least one local cell or local cell group supports at least one of the following capabilities: a MIMO capability, a MIMO single stream capability, a capability of cell specific transmission diversity handling in downlink, a capability of DC-HSDPA on adjacent frequencies in a single frequency band, a capability of DC-HSDPA on non-adjacent frequencies in a single frequency band, a DB-DC-HSDPA capability, a DC-HSUPA capability, a 4C-HSDPA capability, and an 8C-HSDPA capability, for example, as shown in Table 4.

FIG. 9 is a block diagram of a radio network controller according to an embodiment of the present invention. The radio network controller 90 in FIG. 9 comprises a receiving unit 91 and a configuration unit 92.

The receiving unit 91 receives multiflow transmission capability information, sent by a base station, of at least one local cell or local cell group controlled by the base station. The configuration unit 92 configures, according to the multiflow transmission capability information received by the receiving unit 91, an HSDPA multiflow transmission operation of a user equipment that is connected to the base station.

In the embodiment of the present invention, a base station sends multiflow transmission capability information of a local cell or local cell group to a radio network controller. In this way, after connection of a UE, the radio network controller can properly configure an HSDPA multiflow transmission operation of the UE according to the multiflow transmission capability information, thereby effectively applying a feature of HSDPA multiflow transmission.

The receiving unit 91 may be implemented by using an interface or a receiver, and the configuration unit 92 may be implemented by using a processor.

Optionally, as an embodiment, the receiving unit 91 may receive an information element sent by a base station, where the information element carries multiflow transmission capability information of all local cells or local cell groups of the at least one local cell or local cell group. When the at least one local cell or local cell group refers to all the local cells or local cell groups controlled by the base station, the multiflow transmission capability information indicates an HSDPA multiflow transmission capability of the base station. In this case, the RNC needs to receive the multiflow transmission capability information from the base station only once to know the multiflow transmission capability information of all the local cells or local cell groups controlled by the base station.

Alternatively, the receiving unit 91 may receive at least one information element sent by the base station. The at least one information element each carries multiflow transmission capability information of one local cell or local cell group of the at least one local cell or local cell group. The at least one information element may be reported in a message by the base station to the RNC, or reported in multiple messages to the RNC separately, which is not limited in the embodiment of the present invention.

Optionally, as an embodiment, the receiving unit 91 may receive the multiflow transmission capability information added by the base station to a resource status indication message, or the receiving unit 91 may receive the multiflow transmission capability information added by the base station to an audit response message, for example, as described in the embodiment of FIG. 3 or FIG. 4.

Optionally, as an embodiment, the multiflow transmission capability information may comprise first capability information. The first capability information may be used to indicate that the at least one local cell or local cell group supports an intra-base station multiflow transmission capability, supports an inter-base station multiflow transmission capability, or does not support a multiflow transmission capability; or, the first capability information may be used to indicate that the at least one local cell or local cell group supports a multiflow transmission capability, or does not support a multiflow transmission capability.

Optionally, as another embodiment, the configuration unit 92 may further limit a multiflow transmission coordinating cell or a frequency according to a neighboring cell list.

Optionally, as another embodiment, the first capability information may further comprise at least one of: information about frequencies that are supported by multiflow transmission, information about a maximum number of multiflow transmission coordinating cells, a list of multiflow transmission coordinating cells of the base station, a list of non-multiflow transmission coordinating cells of the base station, a list of cells of the base station that support multiflow transmission, and a list of cells of the base station that do not support multiflow transmission.

Optionally, as another embodiment, the multiflow transmission capability information may further comprise second capability information and third capability information, or comprise combination information of the second capability information and the third capability information. The combination information is information used to indicate a combination of various capabilities in the second capability information and various capabilities in the third capability information, for example, may be a mapping value or an index value corresponding to the combination of the various capabilities in the second capability information and the various capabilities in the third capability information. However, a specific form of the combination information is not limited in the embodiment of the present invention, as long as the combination information can indicate the combination of the various capabilities in the second capability information and the various capabilities in the third capability information, for example, as shown in Table 5.

The second capability information and the third capability information are extensions of the first capability information. Optionally, the second capability information may be used to indicate whether the at least one local cell or local cell group supports at least one of the following capabilities: an SF-DC capability, a DF-4C capability, a 4F-8C capability, and an 8F-16C capability, for example, as shown in Table 3.

Optionally, the third capability information may be used to indicate whether the at least one local cell or local cell group supports at least one of the following capabilities: a MIMO capability, a MIMO single stream capability, a capability of cell specific transmission diversity handling in downlink, a capability of DC-HSDPA on adjacent frequencies in a single frequency band, a capability of DC-HSDPA on non-adjacent frequencies in a single frequency band, a DB-DC-HSDPA capability, a DC-HSUPA capability, a 4C-HSDPA capability, and an 8C-HSDPA capability, for example, as shown in Table 4.

A communications system according to an embodiment of the present invention may comprise the foregoing base station 80 or radio network controller 90.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium, and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for reporting cell capability information, comprising:
obtaining (101), by a base station, high speed downlink packet access, HSDPA, multiflow transmission capability information of at least one local cell controlled by the base station, wherein the HSDPA multiflow transmission capability information comprises first capability information; and
sending (102), by the base station, the HSDPA multiflow transmission capability information to a radio network controller, RNC, for the RNC configuring an HSDPA multiflow transmission operation for a user equipment that is connected to the base station;
wherein the first capability information is used for indicating that the at least one local cell supports an intra-base station multiflow transmission capability, or the first capability information is used for indicating that the at least one local cell supports an inter-base station multiflow transmission capability.

2. The method according to claim 1, wherein the HSDPA multiflow transmission capability information further comprises second capability information and third capability information, wherein:
the second capability information is used to indicate whether the at least one local cell supports at least one of the following capabilities: a single frequency dual cell, SF-DC, capability, a dual frequency four cell, DF-4C, capability, a four frequency eight cell, 4F-8C, capability, and an eight frequency sixteen cell, 8F-16C, capability; and
the third capability information is used to indicate whether the at least one local cell supports at least one of the following capabilities: a multiple-input multiple-output, MIMO, capability, a MIMO single stream capability, a capability of cell specific transmission diversity handling in downlink, a capability of dual carrier-HSDPA on adjacent frequencies in a single frequency band, a capability of dual carrier-HSDPA on non-adjacent frequencies in a single frequency band, a dual band-dual carrier-HSDPA capability, a dual carrier-HSUPA capability, a four carrier-HSDPA capability, and an eight carrier-HSDPA capability.

3. The method according to claim 1, wherein the HSDPA multiflow transmission capability information further comprises combination information of second capability information and third capability information, wherein:
the second capability information is used for indicating whether the at least one local cell supports at least one of the following capabilities: a single frequency dual cell, SF-DC, capability, a dual frequency four cell, DF-4C, capability, a four frequency eight cell, 4F-8C, capability, and an eight frequency sixteen cell, 8F-16C, capability; and
the third capability information is used for indicating whether the at least one local cell supports at least one of the following capabilities: a multiple-input multiple-output, MIMO, capability, a MIMO single stream capability, a capability of cell specific transmission diversity handling in downlink, a capability of dual carrier-HSDPA on adjacent frequencies in a single frequency band, a capability of dual carrier-HSDPA on non-adjacent frequencies in a single frequency band, a dual band-dual carrier-HSDPA capability, a dual carrier-HSUPA capability, a four carrier-HSDPA capability, and an eight carrier-HSDPA capability.

4. The method according to any one of claims 1 to 3, wherein the sending the HSDPA multiflow transmission capability information to a radio network controller comprises:
sending a resource status indication message to the RNC, wherein the resource status indication message carries the HSDPA multiflow transmission capability information; or
sending an audit response message to the RNC, wherein the audit response message carries the HSDPA multiflow transmission capability information.

5. A method for reporting cell capability information, comprising:
receiving (201), by a radio network controller, RNC, high speed downlink packet access, HSDPA, multiflow transmission capability information of at least one local cell controlled by a base station from the base station; and
configuring (202), by the RNC, according to the HSDPA multiflow transmission capability information, an HSDPA multiflow transmission operation for a user equipment that is connected to the base station;
wherein the HSDPA multiflow transmission capability information comprises first capability information, and the first capability information is used for indicating that the at least one local cell supports an intra-base station multiflow transmission capability, or the first capability information is used for indicating that the at least one local cell supports an inter-base station multiflow transmission capability.

6. The method according to claim 5, wherein the HSDPA multiflow transmission capability information further comprises second capability information and third capability information, wherein:
the second capability information is used for indicating whether the at least one local cell supports at least one of the following capabilities: a single frequency dual cell, SF-DC, capability, a dual frequency four cell, DF-4C, capability, a four frequency eight cell, 4F-8C, capability, and an eight frequency sixteen cell, 8F-16C, capability; and
the third capability information is used for indicating whether the at least one local cell supports at least one of the following capabilities: a multiple-input multiple-output, MIMO, capability, a MIMO single stream capability, a capability of cell specific transmission diversity handling in downlink, a capability of dual carrier-HSDPA on adjacent frequencies in a single frequency band, a capability of dual carrier-HSDPA on non-adjacent frequencies in a single frequency band, a dual band-dual carrier-HSDPA capability, a dual carrier-HSUPA capability, a four carrier-HSDPA capability, and an eight carrier-HSDPA capability.

7. The method according to claim 5, wherein the HSDPA multiflow transmission capability information further comprises combination information of second capability information and third capability information, wherein:
the second capability information is used for indicating whether the at least one local cell supports at least one of the following capabilities: a single frequency dual cell, SF-DC, capability, a dual frequency four cell, DF-4C, capability, a four frequency eight cell, 4F-8C, capability, and an eight frequency sixteen cell, 8F-16C, capability; and
the third capability information is used for indicating whether the at least one local cell supports at least one of the following capabilities: a multiple-input multiple-output, MIMO, capability, a MIMO single stream capability, a capability of cell specific transmission diversity handling in downlink, a capability of dual carrier-HSDPA on adjacent frequencies in a single frequency band, a capability of dual carrier-HSDPA on non-adjacent frequencies in a single frequency band, a dual band-dual carrier-HSDPA capability, a dual carrier-HSUPA capability, a four carrier-HSDPA capability, and an eight carrier-HSDPA capability.

8. Abase station, comprising:
an obtaining unit (81), configured to obtain high speed downlink packet access, HSDPA, multiflow transmission capability information of at least one local cell controlled by the base station, wherein the HSDPA multiflow transmission capability information comprises first capability information; and
a sending unit (82), configured to send the HSDPA multiflow transmission capability information obtained by the obtaining unit to a radio network controller, RNC, for the RNC configuring an HSDPA multiflow transmission operation for a user equipment that is connected to the base station;
wherein the HSDPA multiflow transmission capability information obtained by the obtaining unit comprises first capability information, and the first capability information is used for indicating that the at least one local cell supports an intra-base station multiflow transmission capability, or the first capability information is used for indicating that the at least one local cell supports an inter-base station multiflow transmission capability.

9. The base station according to claim 8, wherein the HSDPA multiflow transmission capability information obtained by the obtaining unit further comprises second capability information and third capability information, wherein:
the second capability information is used for indicating whether the at least one local cell supports at least one of the following capabilities: a single frequency dual cell, SF-DC, capability, a dual frequency four cell, DF-4C, capability, a four frequency eight cell, 4F-8C, capability, and an eight frequency sixteen cell, 8F-16C, capability; and
the third capability information is used for indicating whether the at least one local cell supports at least one of the following capabilities: a multiple-input multiple-output, MIMO, capability, a MIMO single stream capability, a capability of cell specific transmission diversity handling in downlink, a capability of dual carrier- HSDPA on adjacent frequencies in a single frequency band, a capability of dual carrier-HSDPA on non-adjacent frequencies in a single frequency band, a dual band-dual carrier-HSDPA capability, a dual carrier-HSUPA capability, a four carrier-HSDPA capability, and an eight carrier-HSDPA capability.

10. The base station according to claim 8, wherein the HSDPA multiflow transmission capability information obtained by the obtaining unit further comprises combination information of second capability information and third capability information, wherein:
the second capability information is used for indicating whether the at least one local cell supports at least one of the following capabilities: a single frequency dual cell, SF-DC, capability, a dual frequency four cell, DF-4C, capability, a four frequency eight cell, 4F-8C, capability, and an eight frequency sixteen cell, 8F-16C, capability; and
the third capability information is used for indicating whether the at least one local cell supports at least one of the following capabilities: a multiple-input multiple-output, MIMO, capability, a MIMO single stream capability, a capability of cell specific transmission diversity handling in downlink, a capability of dual carrier-HSDPA on adjacent frequencies in a single frequency band, a capability of dual carrier-HSDPA on non-adjacent frequencies in a single frequency band, a dual band-dual carrier-HSDPA capability, a dual carrier-HSUPA capability, a four carrier-HSDPA capability, and an eight carrier-HSDPA capability.

11. The base station according to any one of claims 8 to 10, wherein the sending unit is further configured to send a resource status indication message to the radio network controller, wherein the resource status indication message carries the HSDPA multiflow transmission capability information; or
the sending unit is further configured to send an audit response message to the radio network controller, wherein the audit response message carries the HSDPA multiflow transmission capability information.

12. A radio network controller, comprising:
a receiving unit (91), configured to receive high speed downlink packet access, HSDPA, multiflow transmission capability information, sent by a base station, of at least one local cell controlled by the base station; and
a configuration unit (92), configured to configure, according to the HSDPA multiflow transmission capability information received by the receiving unit, an HSDPA multiflow transmission operation for a user equipment that is connected to the base station;
wherein the HSDPA multiflow transmission capability information received by the receiving unit comprises first capability information, and the first capability information is used for indicating that the at least one local cell supports an intra-base station multiflow transmission capability, or the first capability information is used for indicating that the at least one local cell supports an inter-base station multiflow transmission capability.

13. The radio network controller according to claim 12, wherein the HSDPA multiflow transmission capability information received by the receiving unit further comprises second capability information and third capability information, wherein:
the second capability information is used to indicate whether the at least one local cell supports at least one of the following capabilities: a single frequency dual cell SF-DC capability, a dual frequency four cell, DF-4C, capability, a four frequency eight cell, 4F-8C, capability, and an eight frequency sixteen cell, 8F-16C, capability; and
the third capability information is used for indicating whether the at least one local cell supports at least one of the following capabilities: a multiple-input multiple-output, MIMO, capability, a MIMO single stream capability, a capability of cell specific transmission diversity handling in downlink, a capability of dual carrier-HSDPA on adjacent frequencies in a single frequency band, a capability of dual carrier-HSDPA on non adjacent frequencies in a single frequency band, a dual band-dual carrier-HSDPA capability, a dual carrier-HSUPA capability, a four carrier-HSDPA capability, and an eight carrier-HSDPA capability.

14. The base station according to claim 12, wherein the HSDPA multiflow transmission capability information received by the receiving unit further comprises combination information of second capability information and third capability information, wherein:
the second capability information is used for indicating whether the at least one local cell supports at least one of the following capabilities: a single frequency dual cell SF-DC capability, a dual frequency four cell, DF-4C, capability, a four frequency eight cell, 4F-8C, capability, and an eight frequency sixteen cell, 8F-16C, capability; and
the third capability information is used for indicating whether the at least one local cell supports at least one of the following capabilities: a multiple-input multiple-output, MIMO, capability, a MIMO single stream capability, a capability of cell specific transmission diversity handling in downlink, a capability of dual carrier-HSDPA on adjacent frequencies in a single frequency band, a capability of dual carrier-HSDPA on non adjacent frequencies in a single frequency band, a dual band-dual carrier-HSDPA capability, a dual carrier-HSUPA capability, a four carrier-HSDPA capability, and an eight carrier-HSDPA capability.

15. A communications system, **characterized by** comprising the base station according to any one of claims 8 to 11 and the radio network controller according to any one of claims 12 to 14.

## Patentansprüche

1. Verfahren zum Melden von Zellenkapazitätsinformationen, umfassend:
Erhalten (101) durch eine Basisstation von HSDPA(High Speed Downlink Packet Access - Hochgeschwindigkeitspaketzugang auf der Abwärtsstrecke)-Vielfluss-Übertragungskapazitätsinformationen von wenigstens einer durch die Basisstation gesteuerten Ortszelle, wobei die HSDPA-Vielfluss-Übertragungskapazitätsinformationen eine erste Kapazitätsinformation umfassen; und
Senden (102) durch die Basisstation der HSDPA-Vielfluss-Übertragungskapazitätsinformationen zu einer Funknetzsteuerung (RNC - Radio Network Controller) zum Einrichten durch die RNC einer HSDPA-Vielfluss-Übertragungsoperation für ein Teilnehmergerät, das mit der Basisstation verbunden ist;
wobei die erste Kapazitätsinformation dazu benutzt wird, anzuzeigen, dass die wenigstens eine Ortszelle eine basisstationsinterne Vielfluss-Übertragungskapazität unterstützt, oder die erste Kapazitätsinformation dazu benutzt wird, anzuzeigen, dass die wenigstens eine Ortszelle eine Vielfluss-Übertragungskapazität zwischen Basisstationen unterstützt.

2. Verfahren nach Anspruch 1, wobei die HSDPA-Vielfluss-Übertragungskapazitätsinformationen weiterhin eine zweite Kapazitätsinformation und eine dritte Kapazitätsinformation umfassen, wobei:
die zweite Kapazitätsinformation dazu benutzt wird, anzuzeigen, ob die wenigstens eine Ortszelle wenigstens eine der folgenden Kapazitäten unterstützt: eine Einzelfrequenz-Doppelzellen(SF-DC - Single Frequency Dual Cell)-Kapazität, eine Doppelfrequenz-Vierzellen(DF-4C - Dual Frequency Four Cell)-Kapazität, eine Vierfrequenz-Achtzellen(4F-8C - Four Frequency Eight Cell)-Kapazität und eine Achtfrequenz-Sechzehnzellen(8F-16C - Eight Frequency Sixteen Cell)-Kapazität; und
die dritte Kapazitätsinformation dazu benutzt wird, anzuzeigen, ob die wenigstens eine Ortszelle wenigstens eine der folgenden Kapazitäten unterstützt: eine Vielfacheingangs-/Vielfachausgangs(MIMO - Multiple-Input Multiple-Output)-Kapazität, eine MIMO-Einzelstromkapazität, eine Kapazität von zellenspezifischer Übertragungsdiversitätsbearbeitung auf der Abwärtsstrecke, eine Kapazität von Doppelträger-HSDPA auf Nachbarfrequenzen in einem Einzelfrequenzband, eine Kapazität von Doppelträger-HSDPA auf nichtbenachbarten Frequenzen in einem Einzelfrequenzband, eine Doppelband/Doppelträger-HSDPA-Kapazität, eine Doppelträger-HSUPA-Kapazität, eine Vierträger-HSDPA-Kapazität und eine Achtträger-HSDPA-Kapazität.

3. Verfahren nach Anspruch 1, wobei die HSDPA-Vielfluss-Übertragungskapazitätsinformationen weiterhin Kombinationsinformationen von der zweiten Kapazitätsinformation und der dritten Kapazitätsinformation umfassen, wobei:
die zweite Kapazitätsinformation dazu benutzt wird, anzuzeigen, ob die wenigstens eine Ortszelle wenigstens eine der folgenden Kapazitäten unterstützt: eine Einzelfrequenz-Doppelzellen(SF-DC-Single Frequency Dual Cell)-Kapazität, eine Doppelfrequenz-Vierzellen(DF-4C - Dual Frequency Four Cell)-Kapazität, eine Vierfrequenz-Achtzellen(4F-8C - Four Frequency Eight Cell)-Kapazität und eine Achtfrequenz-Sechzehnzellen(8F-16C - Eight Frequency Sixteen Cell)-Kapazität; und
die dritte Kapazitätsinformation dazu benutzt wird, anzuzeigen, ob die wenigstens eine Ortszelle wenigstens eine der folgenden Kapazitäten unterstützt: eine Vielfacheingangs-/Vielfachausgangs(MIMO - Multiple-Input Multiple-Output)-Kapazität, eine MIMO-Einzelstromkapazität, eine Kapazität von zellenspezifischer Übertragungsdiversitätsbearbeitung auf der Abwärtsstrecke, eine Kapazität von Doppelträger-HSDPA auf Nachbarfrequenzen in einem Einzelfrequenzband, eine Kapazität von Doppelträger-HSDPA auf nichtbenachbarten Frequenzen in einem Einzelfrequenzband, eine Doppelband/Doppelträger-HSDPA-Kapazität, eine Doppelträger-HSUPA-Kapazität, eine Vierträger-HSDPA-Kapazität und eine Achtträger-HSDPA-Kapazität.

4. Verfahren nach einem beliebigen der Ansprüche 1 bis 3, wobei das Senden der HSDPA-Vielfluss-Übertragungskapazitätsinformationen zu einer Funknetzsteuerung umfasst:
Senden einer Ressourcenzustandsanzeigenachricht zu der RNC, wobei die Ressourcenzustandsanzeigenachricht die HSDPA-Vielfluss-Übertragungskapazitätsinformationen trägt; oder
Senden einer Revisionsantwortnachricht zu der RNC, wobei die Revisionsantwortnachricht die HSDPA-Vielfluss-Übertragungskapazitätsinformationen trägt.

5. Verfahren zum Melden von Zellenkapazitätsinformationen, umfassend:
Empfangen (201) durch eine Funknetzsteuerung (RNC - Radio Network Controller) von HSDPA (High Speed Downlink Packet Access - Hochgeschwindigkeitspaketzugang auf der Abwärtsstrecke)-Vielfluss-Übertragungskapazitätsinformationen von wenigstens einer durch eine Basisstation gesteuerten Ortszelle von der Basisstation; und
Einrichten (202) durch die RNC gemäß den HSDPA-Vielfluss-Übertragungskapazitätsinformationen einer HSDPA-Vielfluss-Übertragungsoperation für ein Teilnehmergerät, das mit der Basisstation verbunden ist;
wobei die HSDPA-Vielfluss-Übertragungskapazitätsinformationen eine erste Kapazitätsinformation umfassen und die erste Kapazitätsinformation dazu benutzt wird, anzuzeigen, dass die wenigstens eine Ortszelle eine basisstationsinterne Vielfluss-Übertragungskapazität unterstützt, oder die erste Kapazitätsinformation dazu benutzt wird, anzuzeigen, dass die wenigstens eine Ortszelle eine Vielfluss-Übertragungskapazität zwischen Basisstationen unterstützt.

6. Verfahren nach Anspruch 5, wobei die HSDPA-Vielfluss-Übertragungskapazitätsinformationen weiterhin eine zweite Kapazitätsinformation und eine dritte Kapazitätsinformation umfassen, wobei:
die zweite Kapazitätsinformation dazu benutzt wird, anzuzeigen, ob die wenigstens eine Ortszelle wenigstens eine der folgenden Kapazitäten unterstützt: eine Einzelfrequenz-Doppelzellen(SF-DC - Single Frequency Dual Cell)-Kapazität, eine Doppelfrequenz-Vierzellen(DF-4C - Dual Frequency Four Cell)-Kapazität, eine Vierfrequenz-Achtzellen(4F-8C - Four Frequency Eight Cell)-Kapazität und eine Achtfrequenz-Sechzehnzellen(8F-16C - Eight Frequency Sixteen Cell)-Kapazität, und
die dritte Kapazitätsinformation dazu benutzt wird, anzuzeigen, ob die wenigstens eine Ortszelle wenigstens eine der folgenden Kapazitäten unterstützt: eine Vielfacheingangs-/Vielfachausgangs(MIMO - Multiple-Input Multiple-Output)-Kapazität, eine MIMO-Einzelstromkapazität, eine Kapazität von zellenspezifischer Übertragungsdiversitätsbearbeitung auf der Abwärtsstrecke, eine Kapazität von Doppelträger-HSDPA auf Nachbarfrequenzen in einem Einzelfrequenzband, eine Kapazität von Doppelträger-HSDPA auf nichtbenachbarten Frequenzen in einem Einzelfrequenzband, eine Doppelband/Doppelträger-HSDPA-Kapazität, eine Doppelträger-HSUPA-Kapazität, eine Vierträger-HSDPA-Kapazität und eine Achtträger-HSDPA-Kapazität.

7. Verfahren nach Anspruch 5, wobei die HSDPA-Vielfluss-Übertragungskapazitätsinformationen weiterhin Kombinationsinformationen von der zweiten Kapazitätsinformation und der dritten Kapazitätsinformation umfassen, wobei:
die zweite Kapazitätsinformation dazu benutzt wird, anzuzeigen, ob die wenigstens eine Ortszelle wenigstens eine der folgenden Kapazitäten unterstützt: eine Einzelfrequenz-Doppelzellen(SF-DC)-Kapazität, eine Doppelfrequenz-Vierzellen(DF-4C)-Kapazität, eine Vierfrequenz-Achtzellen(4F-8C)-Kapazität und eine Achtfrequenz-Sechzehnzellen-(8F-16C)-Kapazität, und
die dritte Kapazitätsinformation dazu benutzt wird, anzuzeigen, ob die wenigstens eine Ortszelle wenigstens eine der folgenden Kapazitäten unterstützt: eine Vielfacheingangs-/Vielfachausgangs(MIMO)-Kapazität, eine MIMO-Einzelstromkapazität, eine Kapazität von zellenspezifischer Übertragungsdiversitätsbearbeitung auf der Abwärtsstrecke, eine Kapazität von Doppelträger-HSDPA auf Nachbarfrequenzen in einem Einzelfrequenzband, eine Kapazität von Doppelträger-HSDPA auf nichtbenachbarten Frequenzen in einem Einzelfrequenzband, eine Doppelband/Doppelträger-HSDPA-Kapazität, eine Doppelträger-HSUPA-Kapazität, eine Vierträger-HSDPA-Kapazität und eine Achtträger-HSDPA-Kapazität.

8. Basisstation, umfassend:
eine Erhaltungseinheit (81), eingerichtet zum Erhalten von HSDPA (High Speed Downlink Packet Access - Hochgeschwindigkeitspaketzugang auf der Abwärtsstrecke)-Vielfluss-Übertragungskapazitätsinformationen von wenigstens einer durch die Basisstation gesteuerten Ortszelle, wobei die HSDPA-Vielfluss-Übertragungskapazitätsinformationen erste Kapazitätsinformation umfassen; und
eine Sendeeinheit (82), eingerichtet zum Senden der durch die Erhaltungseinheit erhaltenen HSDPA-Vielfluss-Übertragungskapazitätsinformationen zu einer Funknetzsteuerung (RNC - Radio Network Controller) für die RNC zum Einrichten einer HSDPA-Vielfluss-Übertragungsoperation für ein Teilnehmergerät, das mit der Basisstation verbunden ist;
wobei die durch die Erhaltungseinheit erhaltene HSDPA-Vielfluss-Übertragungskapazitätsinformationen eine erste Kapazitätsinformation umfassen und die erste Kapazitätsinformation dazu benutzt wird, anzuzeigen, dass die wenigstens eine Ortszelle eine basisstationsinterne Vielfluss-Übertragungskapazität unterstützt, oder die erste Kapazitätsinformation dazu benutzt wird, anzuzeigen, dass die wenigstens eine Ortszelle eine Vielfluss-Übertragungskapazität zwischen Basisstationen unterstützt.

9. Basisstation nach Anspruch 8, wobei die durch die Erhaltungseinheit erhaltene HSDPA-Vielfluss-Übertragungskapazitätsinformationen weiterhin eine zweite Kapazitätsinformation und eine dritte Kapazitätsinformation umfassen, wobei:
die zweite Kapazitätsinformation dazu benutzt wird, anzuzeigen, ob die wenigstens eine Ortszelle wenigstens eine der folgenden Kapazitäten unterstützt: eine Einzelfrequenz-Doppelzellen(SF-DC)-Kapazität, eine Doppelfrequenz-Vierzellen(DF-4C)-Kapazität, eine Vierfrequenz-Achtzellen(4F-8C)-Kapazität und eine Achtfrequenz-Sechzehnzellen(8F-16C)-Kapazität, und
die dritte Kapazitätsinformation dazu benutzt wird, anzuzeigen, ob die wenigstens eine Ortszelle wenigstens eine der folgenden Kapazitäten unterstützt: eine Vielfacheingangs-/Vielfachausgangs(MIMO)-Kapazität, eine MIMO-Einzelstromkapazität, eine Kapazität von zellenspezifischer Übertragungsdiversitätsbearbeitung auf der Abwärtsstrecke, eine Kapazität von Doppelträger-HSDPA auf Nachbarfrequenzen in einem Einzelfrequenzband, eine Kapazität von Doppelträger-HSDPA auf nichtbenachbarten Frequenzen in einem Einzelfrequenzband, eine Doppelband/Doppelträger-HSDPA-Kapazität, eine Doppelträger-HSUPA-Kapazität, eine Vierträger-HSDPA-Kapazität und eine Achtträger-HSDPA-Kapazität.

10. Basisstation nach Anspruch 8, wobei die durch die Erhaltungseinheit erhaltene HSDPA-Vielfluss-Übertragungskapazitätsinformationen weiterhin Kombinationsinformationen von der zweiten Kapazitätsinformation und der dritten Kapazitätsinformation umfassen, wobei:
die zweite Kapazitätsinformation dazu benutzt wird, anzuzeigen, ob die wenigstens eine Ortszelle wenigstens eine der folgenden Kapazitäten unterstützt: eine Einzelfrequenz-Doppelzellen(SF-DC)-Kapazität, eine Doppelfrequenz-Vierzellen(DF-4C)-Kapazität, eine Vierfrequenz-Achtzellen(4F-8C)-Kapazität und eine Achtfrequenz-Sechzehnzellen(8F-16C)-Kapazität, und
die dritte Kapazitätsinformation dazu benutzt wird, anzuzeigen, ob die wenigstens eine Ortszelle wenigstens eine der folgenden Kapazitäten unterstützt: eine Vielfacheingangs-/Vielfachausgangs(MIMO)-Kapazität, eine MIMO-Einzelstromkapazität, eine Kapazität von zellenspezifischer Übertragungsdiversitätsbearbeitung auf der Abwärtsstrecke, eine Kapazität von Doppelträger-HSDPA auf Nachbarfrequenzen in einem Einzelfrequenzband, eine Kapazität von Doppelträger-HSDPA auf nichtbenachbarten Frequenzen in einem Einzelfrequenzband, eine Doppelband/Doppelträger-HSDPA-Kapazität, eine Doppelträger-HSUPA-Kapazität, eine Vierträger-HSDPA-Kapazität und eine Achtträger-HSDPA-Kapazität.

11. Basisstation nach einem beliebigen der Ansprüche 8 bis 10, wobei die Sendeeinheit weiterhin eingerichtet ist zum Senden einer Ressourcenzustandsanzeigenachricht zu der Funknetzsteuerung, wobei die Ressourcenzustandsanzeigenachricht die HSDPA-Vielfluss-Übertragungskapazitätsinformationen trägt; oder
die Sendeeinheit weiterhin eingerichtet ist zum Senden einer Revisionsantwortnachricht zu der Funknetzsteuerung, wobei die Revisionsantwortnachricht die HSDPA-Vielfluss-Übertragungskapazitätsinformationen trägt.

12. Funknetzsteuerung, umfassend:
eine Empfangseinheit (91), eingerichtet zum Empfangen von HSDPA (High Speed Downlink Packet Access - Hochgeschwindigkeitspaketzugang auf der Abwärtsstrecke)-Vielfluss-Übertragungskapazitätsinformationen, durch eine Basisstation gesendet, von wenigstens einer durch die Basisstation gesteuerten Ortszelle; und
eine Einrichtungseinheit (92), eingerichtet zum Einrichten gemäß der durch die Empfangseinheit empfangenen HSDPA-Vielfluss-Übertragungskapazitätsinformationen einer HSDPA-Vielfluss-Übertragungsoperation für ein Teilnehmergerät, das mit der Basisstation verbunden ist;
wobei die durch die Empfangseinheit empfangene HSDPA-Vielfluss-Übertragungskapazitätsinformationen eine erste Kapazitätsinformation umfassen und die erste Kapazitätsinformation dazu benutzt wird, anzuzeigen, dass die wenigstens eine Ortszelle eine basisstationsinterne Vielfluss-Übertragungskapazität unterstützt, oder die erste Kapazitätsinformation dazu benutzt wird, anzuzeigen, dass die wenigstens eine Ortszelle eine Vielfluss-Übertragungskapazität zwischen Basisstationen unterstützt.

13. Funknetzsteuerung nach Anspruch 12, wobei die durch die Empfangseinheit empfangene HSDPA-Vielfluss-Übertragungskapazitätsinformationen weiterhin eine zweite Kapazitätsinformation und eine dritte Kapazitätsinformation umfassen, wobei:
die zweite Kapazitätsinformation dazu benutzt wird, anzuzeigen, ob die wenigstens eine Ortszelle wenigstens eine der folgenden Kapazitäten unterstützt: eine Einzelfrequenz-Doppelzellen(SF-DC)-Kapazität, eine Doppelfrequenz-Vierzellen(DF-4C)-Kapazität, eine Vierfrequenz-Achtzellen(4F-8C)-Kapazität und eine Achtfrequenz-Sechzehnzellen(8F-16C)-Kapazität, und
die dritte Kapazitätsinformation dazu benutzt wird, anzuzeigen, ob die wenigstens eine Ortszelle wenigstens eine der folgenden Kapazitäten unterstützt: eine Vielfacheingangs-/Vielfachausgangs(MIMO)-Kapazität, eine MIMO-Einzelstromkapazität, eine Kapazität von zellenspezifischer Übertragungsdiversitätsbearbeitung auf der Abwärtsstrecke, eine Kapazität von Doppelträger-HSDPA auf Nachbarfrequenzen in einem Einzelfrequenzband, eine Kapazität von Doppelträger-HSDPA auf nichtbenachbarten Frequenzen in einem Einzelfrequenzband, eine Doppelband/Doppelträger-HSDPA-Kapazität, eine Doppelträger-HSUPA-Kapazität, eine Vierträger-HSDPA-Kapazität und eine Achtträger-HSDPA-Kapazität.

14. Basisstation nach Anspruch 12, wobei die durch die Empfangseinheit empfangene HSDPA-Vielfluss-Übertragungskapazitätsinformationen weiterhin Kombinationsinformationen von der zweiten Kapazitätsinformation und der dritten Kapazitätsinformation umfassen, wobei:
die zweite Kapazitätsinformation dazu benutzt wird, anzuzeigen, ob die wenigstens eine Ortszelle wenigstens eine der folgenden Kapazitäten unterstützt: eine Einzelfrequenz-Doppelzellen(SF-DC)-Kapazität, eine Doppelfrequenz-Vierzellen(DF-4C)-Kapazität, eine Vierfrequenz-Achtzellen(4F-8C)-Kapazität und eine Achtfrequenz-Sechzehnzellen(8F-16C)-Kapazität, und
die dritte Kapazitätsinformation dazu benutzt wird, anzuzeigen, ob die wenigstens eine Ortszelle wenigstens eine der folgenden Kapazitäten unterstützt: eine Vielfacheingangs-/Vielfachausgangs(MIMO)-Kapazität, eine MIMO-Einzelstromkapazität, eine Kapazität von zellenspezifischer Übertragungsdiversitätsbearbeitung auf der Abwärtsstrecke, eine Kapazität von Doppelträger-HSDPA auf Nachbarfrequenzen in einem Einzelfrequenzband, eine Kapazität von Doppelträger-HSDPA auf nichtbenachbarten Frequenzen in einem Einzelfrequenzband, eine Doppelband/Doppelträger-HSDPA-Kapazität, eine Doppelträger-HSUPA-Kapazität, eine Vierträger-HSDPA-Kapazität und eine Achtträger-HSDPA-Kapazität.

15. Kommunikationssystem, **dadurch gekennzeichnet, dass** es die Basisstation nach einem beliebigen der Ansprüche 8 bis 11 und die Funknetzsteuerung nach einem beliebigen der Ansprüche 12 bis 14 umfasst.

## Revendications

1. Procédé de rapport d'informations sur la capacité des cellules, comprenant les étapes consistant à :
obtenir (101), par une station de base, des informations sur la capacité de transmission à flux multiple d'accès par paquets de liaison descendante haute vitesse, HSDPA, d'au moins une cellule locale commandée par la station de base, dans lequel les informations sur la capacité de transmission à flux multiple HSDPA comprennent des premières informations sur la capacité ; et
envoyer (102), par la station de base, les informations sur la capacité de transmission à flux multiple HSDPA à un contrôleur de réseau radio, RNC, afin que le RNC configure une opération de transmission à flux multiple HSDPA pour un équipement utilisateur qui est connecté à la station de base ;
dans lequel les premières informations sur la capacité sont utilisées pour indiquer que l'au moins une cellule locale prend en charge une capacité de transmission à flux multiple de l'intra-station de base, ou que les premières informations sur la capacité sont utilisées pour indiquer que l'au moins une cellule locale prend en charge une capacité de transmission à flux multiple de l'intra-station de base.

2. Procédé selon la revendication 1, dans lequel les informations sur la capacité de transmission à flux multiple HSDPA comprennent en outre des deuxièmes informations sur la capacité et des troisièmes informations sur la capacité, dans lequel :
les deuxièmes informations sur la capacité sont utilisées pour indiquer si l'au moins une cellule locale prend en charge au moins une des capacités suivantes : une capacité de fréquence unique à cellule double, SF-DC, une capacité de fréquence double à quatre cellules, DF-4C, une capacité de quatre fréquences à huit cellules, 4F-8C, et une capacité de huit fréquences à seize cellules, 8F-16C ; et
les troisièmes informations sur la capacité sont utilisées pour indiquer si l'au moins une cellule locale prend en charge au moins une des capacités suivantes : une capacité à entrées multiples sorties multiples, MIMO, une capacité à flux unique MIMO, une capacité de gestion de diversité de transmission spécifique de cellule en liaison descendante, une capacité de HSDPA à double porteuse sur des fréquences adjacentes dans une seule bande de fréquence, une capacité de HSDPA à double porteuse sur des fréquences non adjacentes dans une seule bande de fréquence, une capacité de HSDPA à double porteuse et à double bande, une capacité de HSUPA à double porteuse, une capacité de HSDPA à quatre porteuses, et une capacité de HSDPA à huit porteuses.

3. Procédé selon la revendication 1, dans lequel les informations sur la capacité de transmission à flux multiple HSDPA comprennent en outre des informations de combinaison de deuxièmes informations sur la capacité et de troisièmes informations sur la capacité, dans lequel :
les deuxièmes informations sur la capacité sont utilisées pour indiquer si l'au moins une cellule locale prend en charge au moins une des capacités suivantes : une capacité de fréquence unique à cellule double, SF-DC, une capacité de fréquence double à quatre cellules, DF-4C, une capacité de quatre fréquences à huit cellules, 4F-8C, et une capacité de huit fréquences à seize cellules, 8F-16C ; et
les troisièmes informations sur la capacité sont utilisées pour indiquer si l'au moins une cellule locale prend en charge au moins une des capacités suivantes : une capacité à entrées multiples sorties multiples, MIMO, une capacité à flux unique MIMO, une capacité de gestion de diversité de transmission spécifique de cellule en liaison descendante, une capacité de HSDPA à double porteuse sur des fréquences adjacentes dans une seule bande de fréquence, une capacité de HSDPA à double porteuse sur des fréquences non adjacentes dans une seule bande de fréquence, une capacité de HSDPA à double porteuse et à double bande, une capacité de HSUPA à double porteuse, une capacité de HSDPA à quatre porteuses, et une capacité de HSDPA à huit porteuses.

4. Procédé selon l'une quelconque des revendications 1 à 3, dans lequel l'envoi des informations sur la capacité de transmission à flux multiple HSDPA à un contrôleur de réseau radio comprend les étapes consistant à :
envoyer un message d'indication sur l'état des ressources au RNC, dans lequel le message d'indication sur l'état des ressources achemine les informations sur la capacité de transmission à flux multiple HSDPA ; ou
envoyer un message de réponse de vérification au RNC, dans lequel le message de réponse de vérification achemine les informations sur la capacité de transmission à flux multiple HSDPA.

5. Procédé de rapport d'informations sur la capacité des cellules, comprenant les étapes consistant à :
recevoir (201), par un contrôleur de réseau radio, RNC, des informations sur la capacité de transmission à flux multiple d'accès par paquets de liaison descendante haute vitesse, HSDPA, d'au moins une cellule locale commandée par une station de base en provenance de la station de base ; et
configurer (202), par le RNC, en fonction des informations sur la capacité de transmission à flux multiple HSDPA, une opération de transmission à flux multiple HSDPA pour un équipement utilisateur qui est connecté à la station de base ;
dans lequel les informations sur la capacité de transmission à flux multiple HSDPA comprennent des premières informations sur la capacité, et les premières informations sur la capacité sont utilisées pour indiquer que l'au moins une cellule locale prend en charge une capacité de transmission à flux multiple de l'intra-station de base, ou que les premières informations sur la capacité sont utilisées pour indiquer que l'au moins une cellule locale prend en charge une capacité de transmission à flux multiple de l'intra-station de base.

6. Procédé selon la revendication 5, dans lequel les informations sur la capacité de transmission à flux multiple HSDPA comprennent en outre des deuxièmes informations sur la capacité et des troisièmes informations sur la capacité, dans lequel :
les deuxièmes informations sur la capacité sont utilisées pour indiquer si l'au moins une cellule locale prend en charge au moins une des capacités suivantes : une capacité de fréquence unique à cellule double, SF-DC, une capacité de fréquence double à quatre cellules, DF-4C, une capacité de quatre fréquences à huit cellules, 4F-8C, et une capacité de huit fréquences à seize cellules, 8F-16C ; et
les troisièmes informations sur la capacité sont utilisées pour indiquer si l'au moins une cellule locale prend en charge au moins une des capacités suivantes : une capacité à entrées multiples sorties multiples, MIMO, une capacité à flux unique MIMO, une capacité de gestion de diversité de transmission spécifique de cellule en liaison descendante, une capacité de HSDPA à double porteuse sur des fréquences adjacentes dans une seule bande de fréquence, une capacité de HSDPA à double porteuse sur des fréquences non adjacentes dans une seule bande de fréquence, une capacité de HSDPA à double porteuse et à double bande, une capacité de HSUPA à double porteuse, une capacité de HSDPA à quatre porteuses, et une capacité de HSDPA à huit porteuses.

7. Procédé selon la revendication 5, dans lequel les informations sur la capacité de transmission à flux multiple HSDPA comprennent en outre des informations de combinaison de deuxièmes informations sur la capacité et de troisièmes informations sur la capacité, dans lequel :
les deuxièmes informations sur la capacité sont utilisées pour indiquer si l'au moins une cellule locale prend en charge au moins une des capacités suivantes : une capacité de fréquence unique à cellule double, SF-DC, une capacité de fréquence double à quatre cellules, DF-4C, une capacité de quatre fréquences à huit cellules, 4F-8C, et une capacité de huit fréquences à seize cellules, 8F-16C ; et
les troisièmes informations sur la capacité sont utilisées pour indiquer si l'au moins une cellule locale prend en charge au moins une des capacités suivantes : une capacité à entrées multiples sorties multiples, MIMO, une capacité à flux unique MIMO, une capacité de gestion de diversité de transmission spécifique de cellule en liaison descendante, une capacité de HSDPA à double porteuse sur des fréquences adjacentes dans une seule bande de fréquence, une capacité de HSDPA à double porteuse sur des fréquences non adjacentes dans une seule bande de fréquence, une capacité de HSDPA à double porteuse et à double bande, une capacité de HSUPA à double porteuse, une capacité de HSDPA à quatre porteuses, et une capacité de HSDPA à huit porteuses.

8. Station de base, comprenant :
une unité d'obtention (81), configurée pour obtenir les informations sur la capacité de transmission à flux multiple d'accès par paquets de liaison descendante haute vitesse, HSDPA, d'au moins une cellule locale commandée par la station de base, dans laquelle les informations sur la capacité de transmission à flux multiple HSDPA comprennent des premières informations sur la capacité ; et
une unité d'envoi (82), configurée pour envoyer les informations sur la capacité de transmission à flux multiple HSDPA obtenues par l'unité d'obtention à un contrôleur de réseau radio, RNC, afin que le RNC configure une opération de transmission à flux multiple HSDPA pour un équipement utilisateur qui est connecté à la station de base ;
dans laquelle les informations sur la capacité de transmission à flux multiple HSDPA obtenues par l'unité d'obtention comprennent des premières informations sur la capacité, et les premières informations sur la capacité sont utilisées pour indiquer que l'au moins une cellule locale prend en charge une capacité de transmission à flux multiple de l'intra-station de base, ou que les premières informations sur la capacité sont utilisées pour indiquer que l'au moins une cellule locale prend en charge une capacité de transmission à flux multiple de l'intra-station de base.

9. Station de base selon la revendication 8, dans laquelle les informations sur la capacité de transmission à flux multiple HSDPA obtenues par l'unité d'obtention comprennent en outre des deuxièmes informations sur la capacité et des troisièmes informations sur la capacité, dans laquelle :
les deuxièmes informations sur la capacité sont utilisées pour indiquer si l'au moins une cellule locale prend en charge au moins une des capacités suivantes : une capacité de fréquence unique à cellule double, SF-DC, une capacité de fréquence double à quatre cellules, DF-4C, une capacité de quatre fréquences à huit cellules, 4F-8C, et une capacité de huit fréquences à seize cellules, 8F-16C ; et
les troisièmes informations sur la capacité sont utilisées pour indiquer si l'au moins une cellule locale prend en charge au moins une des capacités suivantes : une capacité à entrées multiples sorties multiples, MIMO, une capacité à flux unique MIMO, une capacité de gestion de diversité de transmission spécifique de cellule en liaison descendante, une capacité de HSDPA à double porteuse sur des fréquences adjacentes dans une seule bande de fréquence, une capacité de HSDPA à double porteuse sur des fréquences non adjacentes dans une seule bande de fréquence, une capacité de HSDPA à double porteuse et à double bande, une capacité de HSUPA à double porteuse, une capacité de HSDPA à quatre porteuses, et une capacité de HSDPA à huit porteuses.

10. Station de base selon la revendication 8, dans laquelle les informations sur la capacité de transmission à flux multiple HSDPA obtenues par l'unité d'obtention comprennent en outre des informations de combinaison de deuxièmes informations sur la capacité et de troisièmes informations sur la capacité, dans laquelle :
les deuxièmes informations sur la capacité sont utilisées pour indiquer si l'au moins une cellule locale prend en charge au moins une des capacités suivantes : une capacité de fréquence unique à cellule double, SF-DC, une capacité de fréquence double à quatre cellules, DF-4C, une capacité de quatre fréquences à huit cellules, 4F-8C, et une capacité de huit fréquences à seize cellules, 8F-16C ; et
les troisièmes informations sur la capacité sont utilisées pour indiquer si l'au moins une cellule locale prend en charge au moins une des capacités suivantes : une capacité à entrées multiples sorties multiples, MIMO, une capacité à flux unique MIMO, une capacité de gestion de diversité de transmission spécifique de cellule en liaison descendante, une capacité de HSDPA à double porteuse sur des fréquences adjacentes dans une seule bande de fréquence, une capacité de HSDPA à double porteuse sur des fréquences non adjacentes dans une seule bande de fréquence, une capacité de HSDPA à double porteuse et à double bande, une capacité de HSUPA à double porteuse, une capacité de HSDPA à quatre porteuses, et une capacité de HSDPA à huit porteuses.

11. Station de base selon l'une quelconque des revendications 8 à 10, dans laquelle l'unité d'envoi est configurée en outre pour envoyer un message d'indication sur l'état des ressources au contrôleur de réseau radio, dans laquelle le message d'indication sur l'état des ressources achemine les informations sur la capacité de transmission à flux multiple HSDPA ; ou
l'unité d'envoi est configurée en outre pour envoyer un message de réponse de vérification au contrôleur de réseau radio, dans laquelle le message de réponse de vérification achemine les informations sur la capacité de transmission à flux multiple HSDPA.

12. Contrôleur de réseau radio, comprenant :
une unité de réception (91), configurée pour recevoir des informations sur la capacité de transmission à flux multiple d'accès par paquets de liaison descendante haute vitesse, HSDPA, envoyées par une station de base, d'au moins une cellule locale commandée par la station de base ; et
une unité de configuration (92), configurée pour configurer, en fonction des informations sur la capacité de transmission à flux multiple HSDPA reçues par l'unité de réception, une opération de transmission à flux multiple HSDPA pour un équipement utilisateur qui est connecté à la station de base ;
dans lequel les informations sur la capacité de transmission à flux multiple HSDPA reçues par l'unité de réception comprennent des premières informations sur la capacité, et les premières informations sur la capacité sont utilisées pour indiquer que l'au moins une cellule locale prend en charge une capacité de transmission à flux multiple de l'intra-station de base, ou que les premières informations sur la capacité sont utilisées pour indiquer que l'au moins une cellule locale prend en charge une capacité de transmission à flux multiple de l'intra-station de base.

13. Contrôleur de réseau radio selon la revendication 12, dans lequel les informations sur la capacité de transmission à flux multiple HSDPA reçues par l'unité de réception comprennent en outre des deuxièmes informations sur la capacité et des troisièmes informations sur la capacité, dans lequel :
les deuxièmes informations sur la capacité sont utilisées pour indiquer si l'au moins une cellule locale prend en charge au moins une des capacités suivantes : une capacité de fréquence unique à cellule double, SF-DC, une capacité de fréquence double à quatre cellules, DF-4C, une capacité de quatre fréquences à huit cellules, 4F-8C, et une capacité de huit fréquences à seize cellules, 8F-16C ; et
les troisièmes informations sur la capacité sont utilisées pour indiquer si l'au moins une cellule locale prend en charge au moins une des capacités suivantes : une capacité à entrées multiples sorties multiples, MIMO, une capacité à flux unique MIMO, une capacité de gestion de diversité de transmission spécifique de cellule en liaison descendante, une capacité de HSDPA à double porteuse sur des fréquences adjacentes dans une seule bande de fréquence, une capacité de HSDPA à double porteuse sur des fréquences non adjacentes dans une seule bande de fréquence, une capacité de HSDPA à double porteuse et à double bande, une capacité de HSUPA à double porteuse, une capacité de HSDPA à quatre porteuses, et une capacité de HSDPA à huit porteuses.

14. Station de base selon la revendication 12, dans laquelle les informations sur la capacité de transmission à flux multiple HSDPA reçues par l'unité de réception comprennent en outre des informations de combinaison de deuxièmes informations sur la capacité et de troisièmes informations sur la capacité, dans laquelle :
les deuxièmes informations sur la capacité sont utilisées pour indiquer si l'au moins une cellule locale prend en charge au moins une des capacités suivantes : une capacité de fréquence unique à cellule double, SF-DC, une capacité de fréquence double à quatre cellules, DF-4C, une capacité de quatre fréquences à huit cellules, 4F-8C, et une capacité de huit fréquences à seize cellules, 8F-16C ; et
les troisièmes informations sur la capacité sont utilisées pour indiquer si l'au moins une cellule locale prend en charge au moins une des capacités suivantes : une capacité à entrées multiples sorties multiples, MIMO, une capacité à flux unique MIMO, une capacité de gestion de diversité de transmission spécifique de cellule en liaison descendante, une capacité de HSDPA à double porteuse sur des fréquences adjacentes dans une seule bande de fréquence, une capacité de HSDPA à double porteuse sur des fréquences non adjacentes dans une seule bande de fréquence, une capacité de HSDPA à double porteuse et à double bande, une capacité de HSUPA à double porteuse, une capacité de HSDPA à quatre porteuses, et une capacité de HSDPA à huit porteuses.

15. Système de communication, **caractérisé en ce qu'**il comprend la station de base selon l'une quelconque des revendications 8 à 11 et le contrôleur de réseau radio selon l'une quelconque des revendications 12 à 14.
